# FASCICULE DE BREVET EUROPEEN

(11) **EP 3 234 669 B1**
(45) Date de publication et mention de la délivrance du brevet: **06.05.2020**
(21) Numéro de dépôt: 15823362.7
(22) Date de dépôt: 18.12.2015
(51) Int. Cl.: G02B 6/30, G02B 6/122, G02B 6/13

(54) **MÉTHODE DE FABRICATION D'UN GUIDE PHOTONIQUE ET GUIDE PHOTONIQUE FABRIQUÉ PAR CETTE MÉTHODE**
VERFAHREN ZUR HERSTELLUNG EINES PHOTONEN-WELLENLEITERS UND MIT DIESEM VERFAHREN HERGESTELLTER PHOTONEN-WELLENLEITER
METHOD FOR MANUFACTURING A PHOTONIC WAVEGUIDE AND PHOTONIC WAVEGUIDE MANUFACTURED BY SAID METHOD

(30) Priorité: 19.12.2014 FR 1463008
(43) Date de publication de la demande: 25.10.2017
(73) Titulaire: Université de Franche-Comté, 25000 Besançon (FR); Centre National de la Recherche Scientifique, 75016 Paris (FR)
(72) Inventeur: COURJAL, Nadège, 25000 Besancon (FR); HENROT, Fabien, 67480 Roeschwoog (FR); FIZAINE, Étienne, 25000 Besançon (FR); GUYOT, Clément, 25000 Besançon (FR)
(74) Mandataire: Novagraaf Technologies
(86) Numéro de dépôt international: PCT/FR2015/053657
(87) Numéro de publication internationale: WO 2016/097658

(56) Documents cités:
- US-A- 5 738 798
- US-A1- 2001 026 669
- US-A1- 2009 274 418
- Arnaud Gerthoffer ET AL: "Strong reduction of propagation losses in LiNbO3 ridge waveguides", Optical Materials, 24 octobre 2014 (2014-10-24), pages 37-41, XP055222673, DOI: 10.1016/j.optmat.2014.09.027 Extrait de l'Internet: URL:http://ac.els-cdn.com/S092534671400432 7/1-s2.0-S0925346714004327-main.pdf?_tid=e cf2983a-77f3-11e5-9dc3-00000aab0f6b&acdnat =1445432704_e4a7a693d0ae2d3ee03f6f200a09db f1 [extrait le 2015-10-21]

## Description

### Domaine technique

La présente invention concerne en général les guides d'ondes optiques. Plus précisément, l'invention concerne une méthode de fabrication des guides photoniques et des guides photoniques fabriqués par cette méthode.

### Etat de la technique

Les guides photoniques ont attiré beaucoup d'attention au cours des trente dernières années, en raison de leurs potentialités à confiner l'onde électromagnétique pour renforcer les interactions électro-optiques et non linéaires.

Les guides photoniques (« *photonic waveguides* » en anglais) sont des guides d'ondes optiques formés sur des substrats diélectriques fins d'une épaisseur entre quelques centaines de nanomètres et quelques micromètres, et dans lesquels la lumière est confinée latéralement soit par gravure de matière soit par gradient d'indice.

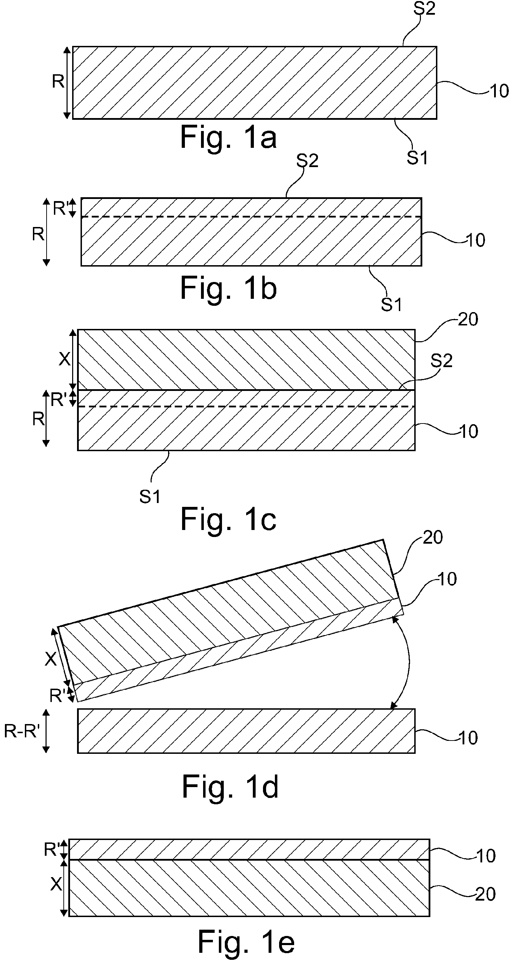

Une méthode connue pour fabriquer un guide photonique comporte l'amincissement d'une surface du substrat diélectrique en impliquant la technique d'implantation ionique et ensuite la formation d'un guide d'onde optique sur la surface amincie du substrat diélectrique. Les figures 1a-1g illustrent un exemple de cette méthode.

En particulier, la figure la illustre un substrat diélectrique 10 ayant une première surface S1, une seconde surface S2 et une épaisseur R avant l'amincissement avec la technique de l'implantation ionique. La figure 1b illustre le substrat diélectrique 10 ayant subi une implantation ionique à une distance R' de la surface S2. Particulièrement, dans la figure 1b, la partie du substrat diélectrique 10 ayant une épaisseur R' et étant déterminée par la ligne pointillée correspond à la partie du substrat diélectrique 10 ayant subi une implantation ionique. Ensuite, comme illustré dans la figure 1c, la surface S2 du substrat diélectrique 10 est collée ou reportée sur un autre substrat diélectrique 20 d'une épaisseur X connu comme superstrat. Ensuite, une étape de découpage du substrat diélectrique 10 est effectuée de telle manière que le superstrat 20 avec la partie du substrat diélectrique 10 d'une épaisseur R' où l'implantation ionique est effectuée sont séparées de la partie du substrat diélectrique 10 d'une épaisseur R-R' (voir figure 1d). La figure le illustre la partie du substrat diélectrique 10 d'une épaisseur R' qui reste après l'amincissement du substrat diélectrique 10 avec la technique d'implantation ionique. Cette partie restant du substrat diélectrique 10 ayant une épaisseur R' et étant collée sur le superstrat 20, correspond à un substrat diélectrique fin d'une épaisseur entre quelques centaines de nanomètres et quelques micromètres. Ce substrat diélectrique fin résultant de l'amincissement du substrat diélectrique 10 forme un guide d'onde optique planaire. Ensuite, un guide d'onde optique microruban est formé à la surface libre du substrat diélectrique 10 ayant une épaisseur R', soit par une étape d'échange d'ion (H⁺ par exemple, ou Na⁺ dans le verre) au travers d'un masque déposé préalablement, soit par gravure (gravure sèche par plasma ionique ou gravure humide par acide fluorhydrique ou par découpage à la scie circulaire de précision) au travers d'un masque déposé préalablement.

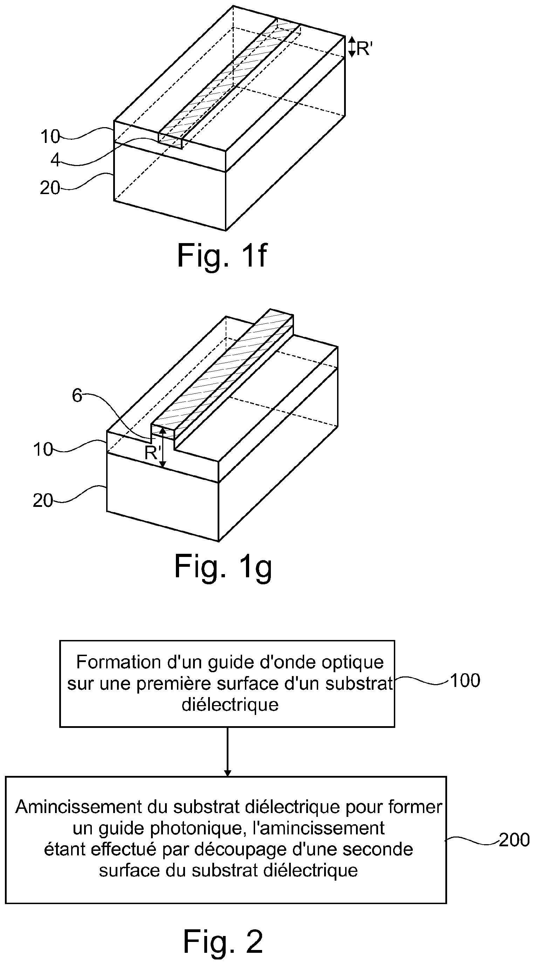

En particulier, la figure 1f illustre une vue en perspective d'un guide photonique de type microruban dans lequel la partie restant du substrat diélectrique 10 (d'une épaisseur R') après l'amincissement du substrat diélectrique 10 est collée sur le superstrat 20. En outre, la figure 1f illustre le microruban 4 du guide d'onde optique microruban formé sur la partie restant du substrat diélectrique 10 après l'étape d'échange ionique mentionnée ci-dessus.

Il est à noter que la gravure (par plasma ionique réactif ou par gravure humide ou par découpe-polissage à la scie circulaire) du substrat diélectrique 10 peut être telle qu'un guide d'onde optique à structure « ridge » (guide en forme de crête) est formé au lieu d'un guide d'onde optique microruban sur le substrat diélectrique 10. Dans ce cas là, le guide photonique obtenu est connu comme un guide photonique de type « ridge ».

En particulier, la figure 1g illustre une vue en perspective d'un guide photonique de type « ridge » dans lequel la partie restant du substrat diélectrique 10 (d'une épaisseur R') après l'amincissement du substrat diélectrique 10 est collée sur le superstrat 20. En outre, la figure 1g illustre le guide d'onde optique à structure « ridge » 6 formé sur la partie restant du substrat diélectrique 10 après la gravure mentionnée ci-dessus. Il est à noter que le guide d'onde optique à structure « ridge » 6 peut présenter à sa surface un ruban ayant un fort indice de réfraction. Ce ruban de fort indice de réfraction est représentée par la zone hachurée de la surface du guide d'onde optique à structure « ridge » 6 de la figure 1g. Cette zone peut être obtenue par exemple en effectuant un dépôt de diélectrique de fort indice préalablement à la gravure, ou en effectuant un échange d'ion préalablement à la gravure, de telle façon que le guide d'onde optique à structure « ridge » 6 ait un ruban de fort indice à sa surface.

Ainsi, les figures 1f et 1g représentent respectivement un guide photonique qui comporte un guide d'onde optique microruban et un guide photonique qui comporte un guide d'onde optique à structure « ridge » fabriqués par la méthode connue mentionnée ci-dessus, dans laquelle l'amincissement d'une surface du substrat diélectrique est effectué en impliquant la technique d'implantation ionique.

Il est à noter qu'un exemple de la technique d'amincissement du substrat diélectrique par l'implantation ionique mentionnée ci-dessus est le découpage en tranches de films monocristallins par implantation ionique (« *smart cut* » ou « *ion slicing* » en anglais). Cet exemple est décrit dans la publication de G. Poberaj et al.« Ion-sliced lithium niobate thin films for active photonic devices, Optical Materials, 31, 1054-1058 (2009*)* ». Un autre exemple de la technique d'amincissement du substrat diélectrique par implantation ionique est la gravure ionique améliorée par faisceau d'ions (« *ion beam enhanced etching* » en anglais) décrit dans la publication de R. Geiss et al. « Light propagation in a free-standing lithium niobate photonic crystal waveguide, Applied Physics Letters, 97, 131109 (2010*)* ». En particulier, l'utilisation de ces techniques consiste en une implantation d'ions (e.g. helium, proton ou argon) à haute énergie sur une surface du substrat diélectrique et puis à un traitement chimique (de type acide fluorhydrique) ou thermique de cette surface.

Comme mentionné ci-dessus, l'épaisseur R' de la partie du substrat diélectrique restant après l'amincissement du substrat diélectrique avec la technique d'implantation ionique est entre quelques centaines de nanomètres et quelques micromètres.

Il a été constaté que lorsque l'épaisseur R' est au-dessous de 5 µm, un confinement vertical fort de l'onde électromagnétique guidée dans le guide d'onde optique est obtenu mais en même temps il apparaît des pertes d'insertion importantes (supérieures à 3 dB) entre le guide photonique et une fibre optique monomode standard (de type SMF28) étant couplée au guide photonique.

Il est connu que les pertes d'insertion correspondent à la contribution des pertes de couplage entre le guide photonique et la fibre optique monomode standard et des pertes de propagation de l'onde électromagnétique sur la longueur du guide photonique. Dans le cas d'une épaisseur R' inférieure à 5 µm, les pertes de couplage par facette avec une fibre monomode standard sont typiquement supérieures à 3 dB. Cela est lié au faible recouvrement entre le mode optique confiné du guide photonique et le mode optique faiblement confiné de la fibre monomode standard. Ces pertes de couplage par facette dépassent même 10 dB si l'épaisseur R' est inférieure à 1 µm. Par ailleurs, les pertes en propagation sont supérieures à 0.7 dB/cm dans le cas où l'épaisseur R' est inférieure à 5 µm et ces pertes dépassent même 2 dB/cm si l'épaisseur R' est inférieure à 1 µm.

Il est à noter que des zones de transitions verticales et/ou latérales ont été proposées pour pallier le problème des faibles pertes d'insertions dans les guides photoniques formés par la méthode d'amincissement mentionnée ci-dessus. Ces zones de transitions consistent à varier continument et progressivement la dimension latérale ou verticale du guide photonique à l'extrémité de celui-ci, de façon à adapter le mode optique du guide photonique au mode optique faiblement confiné de la fibre monomode standard. La variation progressive de la dimension latérale ou verticale du guide photonique s'effectue à la surface où le guide d'onde optique microruban ou le guide d'onde optique à structure « ridge » est formé. Il est à noter qu'une telle variation de hauteur de guide crée une perturbation de l'onde électromagnétique guidée, car les modes optiques autres que le mode optique fondamental sont excités également. Par ailleurs, la réalisation de ces zones de transition implique encore davantage d'étapes de fabrication (au minimum au moins une étape de gravure ou de dépôt en plus des étapes précédemment citées dans la méthode connue pour la fabrication d'un microguide photonique).

En outre, il est à noter que la technique de l'implantation ionique mentionnée ci-dessus pour la formation des guides photoniques est très lourde à mettre en œuvre, et particulièrement elle doit fournir des énergies de l'ordre du MeV pour effectuer l'implantation des ions. Par ailleurs, les énergies de l'ordre du MeV impliquent des conditions de sécurité contraignantes (bâtiments régis par des normes strictes, visite médicale avant le début des travaux et périodique).

En outre, il est à noter que les substrats diélectriques fins (d'une épaisseur de 5 µm ou moins) et reportés sur un superstrat ne résistent pas à des températures supérieures à 800°C, ce qui empêche la mise en œuvre de traitements thermiques sur le guide photonique, tels que diffusion ou recuit. Or il est connu par l'homme de métier qu'un tel traitement thermique peut être important, en particulier pour réduire les rugosités de guide photonique et donc les pertes en propagation, ou pour la mesure de hautes températures à l'aide du guide photonique.

Il existe donc un réel besoin de proposer une méthode de fabrication d'un guide photonique, qui fournit des épaisseurs de substrat diélectrique très fines qui peuvent être inférieures à 5 µm sans pertes d'insertion importantes entre le guide photonique et une fibre optique monomode standard, qui en même temps est simple à mettre en œuvre sans impliquer des conditions de sécurité contraignantes et sans excitation d'autres modes optiques que le mode optique fondamental, et qui permet la réalisation de guides photoniques robustes aux hautes températures.

Les documents US 2009/274418 A1, US 5 738 798 A et US 2001/026669 A1 montrent des guides d'onde et leurs méthodes de fabrication selon l'état de la technique.

### Description de l'invention

Un objet de l'invention concerne une méthode de fabrication d'un guide photonique à faibles pertes d'insertion entre le guide photonique et une fibre optique, la méthode comportant les étapes suivantes:
- formation d'un guide d'onde optique sur une première surface d'un substrat diélectrique;
- amincissement du substrat diélectrique pour former un guide photonique ayant une première extrémité et une seconde extrémité opposée à la première extrémité; l'amincissement étant effectué par découpage d'une seconde surface du substrat diélectrique opposée à la première surface, l'amincissement comprenant un évidement dont le profil est parallèle au guide d'onde optique, la profondeur de l'évidement évoluant continument et progressivement entre un premier point de profondeur nulle à la hauteur de la seconde surface, et une profondeur maximale à une distance prédéterminée l_{q} de la première extrémité du guide photonique destinée à recevoir la fibre optique, l'évolution de la profondeur de l'évidement formant une zone de transition verticale de mode optique de longueur l_{q} entre le guide photonique et la fibre optique.

Des caractéristiques ou des modes de réalisation particuliers, utilisables seuls ou en combinaison, sont :
- le guide d'onde optique est un guide d'onde optique microruban comportant un microruban de fort indice de réfraction ;
- après l'amincissement du substrat diélectrique, le microruban est aminci à une épaisseur minimale entre 300nm et 5µm ;
- le guide d'onde optique est un guide d'onde optique à structure « ridge » formé par un ruban de fort indice de réfraction et par le découpage de deux évidements parallèles et espacés d'une distance wᵣ sur la première surface du substrat diélectrique, le découpage étant tel que la profondeur de deux évidements reste la même sur toute la longueur du substrat diélectrique ;
- le guide d'onde optique est un guide d'onde optique à structure « ridge » formé par un ruban de fort indice de réfraction et par le découpage de deux évidements parallèles et espacés d'une distance wᵣ sur la première surface du substrat diélectrique, le découpage étant tel que la profondeur de chaque évidement évolue continument et progressivement entre une profondeur nulle à la hauteur de la première extrémité du guide d'onde optique destinée à recevoir la fibre optique, et une profondeur maximale à une distance prédéterminée lₚ de la première extrémité du guide d'onde optique, l'évolution de la profondeur de chaque évidement formant une zone de transition verticale de mode optique de longueur lₚ entre le guide d'onde optique à structure « ridge » et la fibre optique ;
- après l'amincissement du substrat diélectrique, le ruban est aminci à une épaisseur minimale entre 300nm et 5µm ;
- la diminution de la profondeur de chaque évidement est effectuée à partir de la première extrémité du guide d'onde optique ou à partir d'une distance prédéterminée à partir de la première extrémité du guide d'onde optique ;
- le découpage est tel que la profondeur de chaque évidement évolue continument et progressivement entre une profondeur nulle à la hauteur de la seconde extrémité du guide d'onde optique et une profondeur maximale à une distance prédéterminée l_{p'} de la seconde extrémité du guide d'onde optique destinée à recevoir une fibre optique, l'évolution de la profondeur de chaque évidement formant une zone de transition verticale de mode optique de longueur l_{p'} entre le guide d'onde optique à structure « ridge » et la fibre optique ;
- la diminution de la profondeur de l'évidement est effectuée à partir de la première extrémité du guide photonique ;
- la diminution de la profondeur de l'évidement est effectuée à partir d'une distance prédéterminée à partir de la première extrémité du guide photonique ;
- le découpage de la seconde surface du substrat diélectrique est tel que la profondeur de l'évidement évolue continument et progressivement entre un second point de profondeur nulle à la hauteur de la seconde surface, et une profondeur maximale à une distance prédéterminée l_{q'} de la seconde extrémité du guide photonique destinée à recevoir une fibre optique, l'évolution de la profondeur de l'évidement formant une zone de transition verticale de mode optique de longueur l_{q'} entre le guide photonique et la fibre optique ;
- la diminution de la profondeur de l'évidement est effectuée à partir de la seconde extrémité du guide photonique ou à partir d'une distance prédéterminée à partir de la seconde extrémité du guide photonique ;
- le découpage est effectué au moyen d'une scie circulaire comportant au moins une lame ;
- la lame est descendue progressivement jusqu'à la profondeur maximale, de sorte que la profondeur évolue comme un arc de cercle de rayon égal au rayon de la lame ;

Un autre objet de l'invention concerne un guide photonique caractérisé en ce qu'il est directement obtenu par la méthode des revendications 1 à 14.

### Brève description des figures

L'invention sera mieux comprise à la lecture de la description qui suit, faite uniquement à titre d'exemple, et en référence aux figures en annexe dans lesquelles :
- Les figures 1a-1g représentent des guides photoniques fabriqués par une méthode de l'art antérieur ;
- La figure 2 représente une méthode de fabrication d'un guide photonique selon un mode de réalisation de l'invention ;
- La figure 3a représente un exemple d'un guide d'onde optique formé sur une première surface d'un substrat diélectrique dans la première étape de la méthode de la figure 2 ;
- La figure 3b représente un autre exemple d'un guide d'onde optique formé sur une première surface d'un substrat diélectrique dans la première étape de la méthode de la figure 2 ;
- La figure 3c représente un autre exemple d'un guide d'onde optique formé sur une première surface d'un substrat diélectrique dans la première étape de la méthode de la figure 2 ;
- La figure 3d représente un autre exemple d'un guide d'onde optique formé sur une première surface d'un substrat diélectrique dans la première étape de la méthode de la figure 2 ;
- La figure 3e représente un autre exemple d'un guide d'onde optique formé sur une première surface d'un substrat diélectrique dans la première étape de la méthode de la figure 2 ;
- La figure 4a représente une vue en perspective du guide photonique formé selon un exemple de la seconde étape de la méthode de la figure 2, dans lequel l'amincissement d'une seconde surface du substrat diélectrique opposée à la première surface du substrat diélectrique de la figure 3a est effectué ;
- La figure 4b représente une vue en coupe transversale prise le long de l'axe X-X' comme indiqué à la figure4a dans le cas où le microruban n'est pas aminci ;
- La figure 4c représente une vue en coupe transversale prise le long de l'axe X-X' comme indiqué à la figure4a dans le cas où le microruban est aminci ;
- La figure 5a représente une vue en perspective du guide photonique formé selon un autre exemple de la seconde étape de la méthode de la figure 2, dans lequel le découpage d'une seconde surface du substrat diélectrique opposée à la première surface du substrat diélectrique de la figure 3a est effectué ;
- La figure 5b représente une vue en coupe transversale prise le long de l'axe X-X' comme indiqué à la figure5a dans le cas où le microruban n'est pas aminci ;
- La figure 5c représente une vue en coupe transversale prise le long de l'axe X-X' comme indiqué à la figure5a dans le cas où le microruban est aminci ;
- La figure 6a représente une vue en perspective du guide photonique formé selon un autre exemple de la seconde étape de la méthode de la figure 2, dans lequel le découpage d'une seconde surface du substrat diélectrique opposée à la première surface du substrat diélectrique de la figure 3a est effectué;
- La figure 6b représente une vue en coupe transversale prise le long de l'axe X-X' comme indiqué à la figure 6a dans le cas où le microruban n'est pas aminci ;
- La figure 6c représente une vue en coupe transversale prise le long de l'axe X-X' comme indiqué à la figure6a dans le cas où le microruban est aminci ;
- La figure 7a représente une vue en perspective du guide photonique formé selon un autre exemple de la seconde étape de la méthode de la figure 2, dans lequel le découpage d'une seconde surface du substrat diélectrique opposée à la première surface du substrat diélectrique de la figure 3a est effectué;
- La figure 7b représente une vue en coupe transversale prise le long de l'axe X-X' comme indiqué à la figure 7a dans le cas où le microruban n'est pas aminci ;
- La figure 7c représente une vue en coupe transversale prise le long de l'axe X-X' comme indiqué à la figure7a dans le cas où le microruban est aminci ;
- La figure 8a représente une vue en perspective du guide photonique formé selon un exemple de la seconde étape de la méthode de la figure 2, dans lequel l'amincissement d'une seconde surface du substrat diélectrique opposée à la première surface du substrat diélectrique de la figure 3b est effectué ;
- La figure 8b représente une vue en coupe transversale prise le long de l'axe X-X' comme indiqué à la figure 8a dans le cas où la zone ruban n'est pas amincie ;
- La figure 8c représente une vue en coupe transversale prise le long de l'axe X-X' comme indiqué à la figure 8a dans le cas où la zone ruban est amincie ;
- La figure 8d représente une vue en perspective du guide photonique de la figure 8a retourné à l'envers afin d'illustrer le guide d'onde optique à structure « ridge » formé sur la première surface du guide photonique de la figure 8a.
- La figure 9 représente un exemple de découpage de la seconde surface du substrat diélectrique effectuée par une lame d'une scie circulaire pour fabriquer le guide photonique de la figure 4a ;
- La figure 10 représente le mode optique à l'entrée du guide d'onde optique à structure « ridge » d'un guide photonique selon un exemple de l'invention.
- La figure 11 représente le mode optique à la sortie du guide d'onde optique à structure « ridge » du guide photonique de la figure 10.

### Modes de réalisation

La figure 2 représente un mode de réalisation d'une méthode de fabrication d'un guide photonique ayant une première extrémité A et une seconde extrémité B opposée à la première extrémité A, et présentant de faibles pertes d'insertion en comparaison avec les pertes d'insertion du guide photonique de l'état de la technique, lorsqu'il est couplé avec une fibre optique monomode standard (par exemple une fibre optique de type SMF28 avec un mode optique faiblement confiné). Il est à noter que la fibre optique mentionnée dans la description des modes de réalisation correspond à une fibre optique monomode standard. En outre, il est à noter que les figures n'illustrent pas la fibre optique qui est couplée à la première extrémité A et/ou à la seconde extrémité B du guide photonique. Cependant, il est à noter qu'un tel couplage est bien connu par l'homme du métier.

Dans une étape 100 de la méthode de la figure 2, la formation d'un guide d'onde optique est effectuée sur une première surface S1 d'un substrat diélectrique 10.

Préférablement, le substrat diélectrique 10 est constitué du niobate de lithium (LiNbO₃) puisque en utilisant de niobate de lithium (LiNbO₃) on peut obtenir un substrat non linéaire, électrooptique et piézoélectrique. Dans un autre exemple, le substrat diélectrique est constitué du verre dopé. Cependant, il est à noter que le substrat diélectrique peut être constitué d'autres types de matériaux, à condition que l'onde électromagnétique puisse être guidée dans ces matériaux.

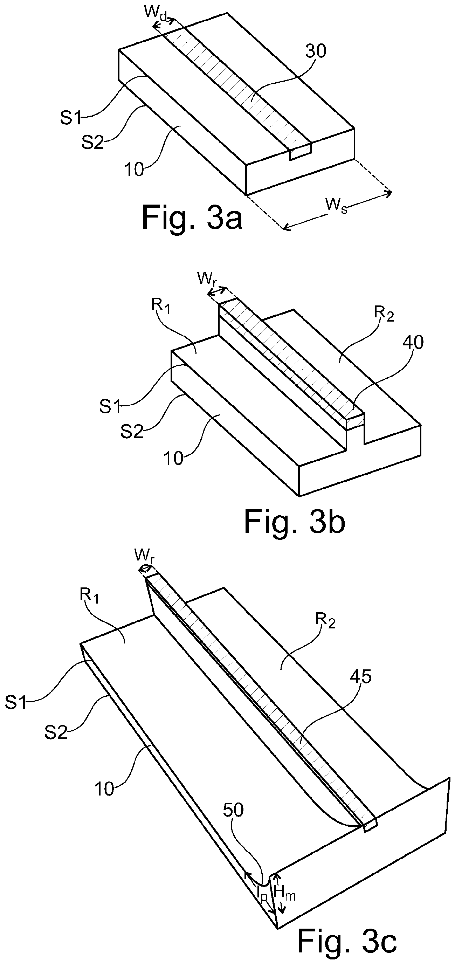

Selon un exemple illustré dans la figure 3a, le guide d'onde optique formé sur la première surface S1 du substrat diélectrique 10 est un guide d'onde optique microruban. Le guide d'onde optique microruban comporte un microruban 30 de fort indice de réfraction qui est inscrit sur une certaine profondeur depuis la première surface S1 du substrat diélectrique 10 et qui a une certaine largeur w_{d}. On appelle microruban de fort indice de réfraction une zone pour laquelle l'indice de réfraction est plus grand que celui du substrat diélectrique. Dans le cas d'un guide d'onde optique microruban à gradient d'indice, la profondeur depuis la première surface S1 correspond à la profondeur à mi-hauteur du profil d'indice, et la largeur w_{d} du microruban 30 correspond à la largeur à mi-hauteur du profil d'indice. Comme illustré dans la figure 3a, la largeur w_{d} du microruban 30 est plus faible que la largeur wₛ du substrat diélectrique 10. L'onde électromagnétique est confinée verticalement grâce au microruban 30 de largeur w_{d} et elle est guidée le long de cette zone du microruban 30. Le microruban 30 peut être formé sur la première surface S1 du substrat diélectrique 10 selon des techniques différentes qui sont bien connues par l'homme du métier. Un exemple de ces techniques est donné dans la publication « Armenise, M.N., "Fabrication techniques of lithium niobate waveguides," Optoelectronics, IEE Proceedings J, vol.135, no.2, pp.85,91, Apr 1988 ». Particulièrement, dans cette publication il est décrit notamment qu'un guide d'onde optique microruban par diffusion titane peut être réalisé à partir du dépôt d'un ruban de titane préalablement défini par une étape de lithographie, et puis diffusé à une température de l'ordre de 1030°C. Il est à noter que le guide d'onde optique microruban de la figure 3a a une forme droite. Cependant, dans un autre exemple bien connu par l'homme du métier et non illustré dans les figures, le guide d'onde optique microruban peut avoir une forme courbe (voir par exemple le guide d'onde optique Mach-Zehnder qui est bien connu par l'homme du métier).

Selon un autre exemple illustré dans la figure 3b, le guide d'onde optique formé sur la première surface S1 du substrat diélectrique 10 est un guide d'onde optique à structure « ridge » formé par un ruban 40 de fort indice de réfraction et par le découpage de deux évidements R1, R2 parallèles et espacés d'une distance wᵣ sur la première surface S1 du substrat diélectrique, la distance wᵣ correspondant à la largeur du guide d'onde optique à structure « ridge ». On appelle ruban de fort indice de réfraction une zone pour laquelle l'indice de réfraction est plus grand que celui du substrat diélectrique. Ce ruban peut être formé par les mêmes techniques que le microruban 30 de la figure 3a. Comme illustré dans la figure 3b, le découpage de deux évidements R1, R2 est tel que la profondeur de ces évidements reste la même sur toute la longueur du substrat diélectrique 10, et elle est supérieure à 10 µm. Le guide d'onde optique de la figure 3b est un guide d'onde optique à structure « ridge » conventionnel. Plus d'information concernant la fabrication du guide d'onde optique de la figure 3c peut être trouvée dans la demande de brevet français no. 1450795.

Selon un autre exemple illustré dans la figure 3c, le guide d'onde optique formé sur la première surface S1 du substrat diélectrique 10 est un guide d'onde optique à structure « ridge » présentant une zone de transition verticale 50 de mode optique entre le guide d'onde optique et une fibre optique sur la première extrémité du guide d'onde optique. En particulier, le guide d'onde optique à structure « ridge » de la figure 3c est formé par un ruban 45 de fort indice de réfraction et par le découpage de deux évidements R1, R2 parallèles et espacés d'une distance wᵣ sur la première surface S1 du substrat diélectrique 10, la distance wᵣ correspondant à la largeur du guide d'onde optique à structure « ridge ». Comme illustré dans la figure 3c, le découpage de deux évidements (R1, R2) est tel que la profondeur de chaque évidement R1, R2 évolue continument et progressivement entre une profondeur nulle à la hauteur de la première extrémité du guide d'onde optique destinée à recevoir la fibre optique, et une profondeur maximale Hₘ à une distance prédéterminée lₚ de la première extrémité du guide d'onde optique, l'évolution de la profondeur de chaque évidement (R1, R2) formant une zone de transition verticale 50 de mode optique de longueur lₚ entre le guide d'onde optique à structure « ridge » et la fibre optique. Plus d'information concernant la fabrication du guide d'onde optique de la figure 3c peut être trouvée dans la demande de brevet français no. 1450795.

Comme illustré dans le guide d'onde optique à structure « ridge » de la figure 3c, la diminution de la profondeur de chaque évidement R1, R2 est effectuée à partir de la première extrémité du guide d'onde optique.

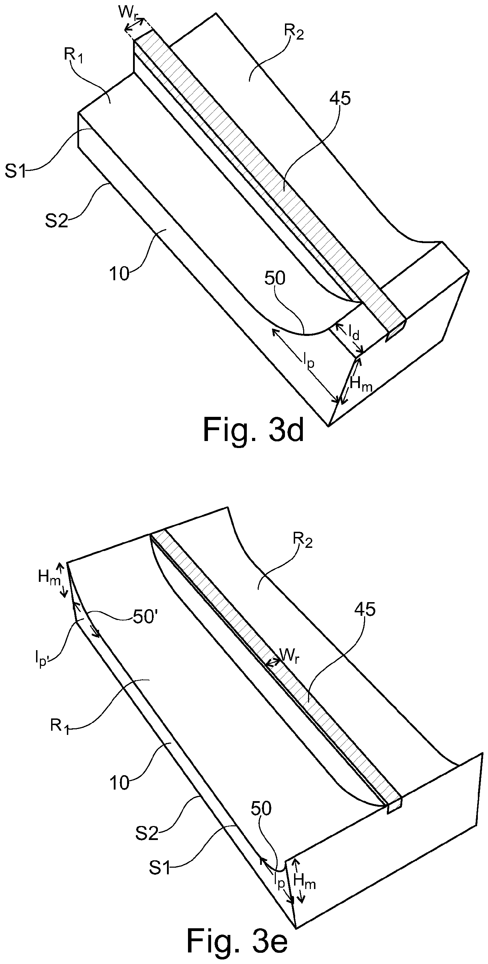

Cependant, dans un autre exemple d'un guide d'onde optique à structure « ridge » illustré dans la figure 3d, la diminution de la profondeur de chaque évidement R1, R2 est effectuée à partir d'une distance prédéterminée l_{d} à partir de la première extrémité du guide d'onde optique. Il est à noter que le guide d'onde optique de la figure 3d diffère du guide d'onde optique de la figure 3c seulement en ce que la diminution de la profondeur de chaque évidement R1, R2 est effectuée à partir d'une distance prédéterminée l_{d} à partir de la première extrémité du guide d'onde optique. En particulier, la figure 3d illustre un guide d'onde optique à structure « ridge » formé par un ruban 45 de fort indice de réfraction et présentant une zone de transition verticale 50 de mode optique entre le guide d'onde optique et une fibre optique, où la zone de transition verticale 50 commence à partir d'une distance prédéterminée l_{d} à partir de la première extrémité du guide d'onde optique. Plus d'information concernant la fabrication du guide d'onde optique de la figure 3d peut être trouvée dans la demande de brevet français no. 1450795.

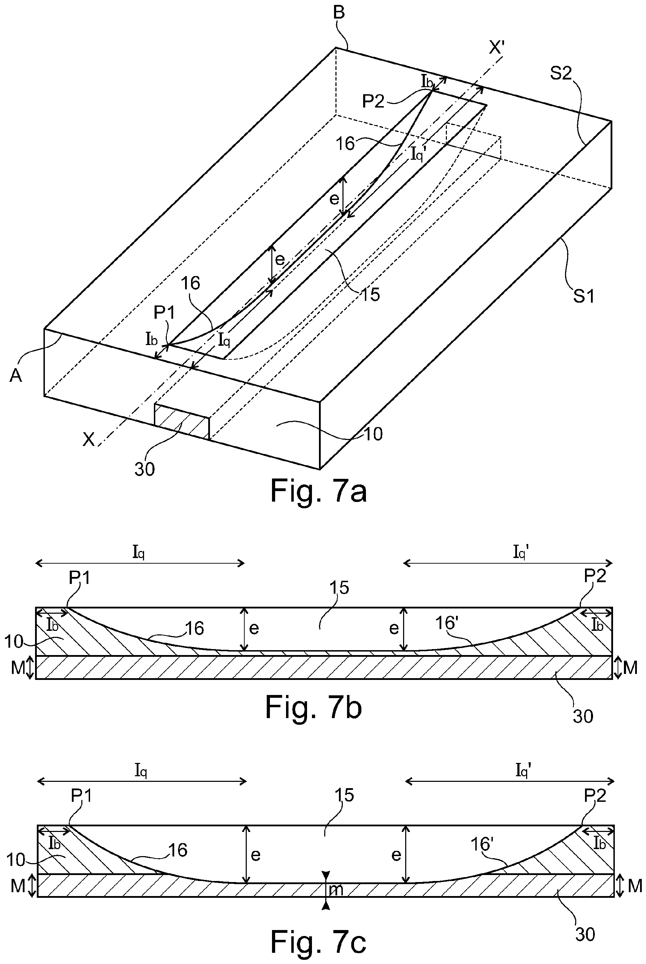

Il est à noter que la configuration du guide d'onde optique à structure « ridge » de la figure 3d, selon laquelle la diminution de la profondeur de chaque évidement R1, R2 est effectuée à partir d'une distance prédéterminée l_{d} à partir de la première extrémité du guide d'onde optique présente l'avantage de permettre de coller une cale sur la partie de la surface du substrat diélectrique 10 de longueur l_{d} qui n'est pas découpée (voir la figure 7 du brevet français no. 1450795). La cale sert à l'amélioration du collage entre le guide d'onde optique à structure « ridge » et la fibre optique puisque elle permet de coller une férule à la hauteur de la première extrémité du guide d'onde optique afin de bien fixer la fibre optique à la position de couplage avec le guide d'onde optique à structure « ridge ».

Selon un autre exemple illustré dans la figure 3e, le guide d'onde optique formé sur la première surface S1 du substrat diélectrique 10 est un guide d'onde optique à structure « ridge » comportant un ruban 45 de fort indice de réfraction et présentant une zone de transition verticale 50 de mode optique entre le guide d'onde optique et une fibre optique sur la première extrémité du guide d'onde optique et également sur la seconde extrémité du guide d'onde optique. Il est à noter que le guide d'onde optique de la figure 3e diffère du guide d'onde optique de la figure 3c seulement en ce qu'il comporte une zone de transition verticale 50 de mode optique entre le guide d'onde optique et une fibre optique dans la première extrémité mais également dans la seconde extrémité du guide d'onde optique. En particulier, afin de former la zone de transition verticale 50 dans la seconde extrémité du guide d'onde optique, le découpage de deux évidements R1, R2 est tel que la profondeur de chaque évidement R1, R2 évolue continument et progressivement entre une profondeur nulle à la hauteur de la seconde extrémité du guide d'onde optique et une profondeur maximale à une distance prédéterminée l_{p'} de la seconde extrémité du guide d'onde optique. Ainsi, l'évolution de la profondeur de chaque évidement R1, R2 forme une zone de transition verticale 50' de mode optique de longueur l_{p'} entre le guide d'onde optique à structure « ridge » et la fibre optique. Il est à noter que la distance prédéterminée l_{p'} de la seconde extrémité du guide d'onde optique peut être la même ou peut être différente que la distance prédéterminée lₚ de la première extrémité du guide d'onde optique. Plus d'information concernant la fabrication du guide d'onde optique de la figure 3e peut être trouvée dans la demande de brevet français no. 1450795.

Il est à noter que dans l'exemple du guide d'onde optique de la figure 3e, la diminution de la profondeur de chaque évidement R1, R2 est effectuée à partir de la première extrémité et la seconde extrémité du guide d'onde optique. Cependant, dans un autre exemple non illustré dans les figures, la diminution de la profondeur de chaque évidement R1, R2 est effectuée à partir d'une distance prédéterminée l_{d} à partir de la première extrémité et de la seconde extrémité du guide d'onde optique. Il est à noter que la distance prédéterminée l_{d} à partir de la première extrémité du guide d'onde optique peut être la même ou peut être différente que la distance prédéterminée l_{d} à partir de la seconde extrémité du guide d'onde optique.

Dans tous les exemples des figures 3c-3e la zone de transition verticale 50 et la zone de transition verticale 50' a un profil arrondi, préférablement avec un rayon de courbure supérieur à 20 mm, puisque il a été constaté que pour un tel rayon de courbure les pertes optiques dans la zone de transition verticale sont inférieures à 0.1dB. Comme il est connu par l'homme du métier, les pertes optiques dans la zone de transition verticale correspondent au rapport entre la puissance optique de la sortie de la zone de transition verticale et la puissance optique de l'entrée de la zone de transition verticale. Cependant, dans un autre exemple le profil de ces zones a une forme linéaire. En outre, dans un autre exemple, une partie du profil de ces zones peut être arrondi et une autre partie du profil de ces zones peut être linéaire.

A titre d'exemple, le découpage de la première surface S1 du substrat diélectrique 10 pour la formation du guide d'onde optique à structure « ridge » dans les figures 3b-3e est un découpage mécanique effectué par une scie circulaire. Dans un autre exemple, le découpage est effectué par gravure laser. Plus d'information concernant le découpage de la première surface S1 du substrat diélectrique 10 des figures 3b-3e peut être trouvée dans la demande de brevet français no. 1450795.

Dans une étape 200 de la méthode de la figure 2, l'amincissement du substrat diélectrique 10 pour former un guide photonique ayant une première extrémité A et une seconde extrémité B opposée à la première extrémité A, est effectué.

En particulier, l'amincissement du substrat diélectrique 10 est effectué par découpage d'une seconde surface S2 du substrat diélectrique 10 opposée à la première surface S1. Ainsi, après la formation du guide d'onde optique sur la première surface S1 du substrat diélectrique 10 (étape 100), le substrat diélectrique 10 est retourné pour effectuer l'amincissement sur la seconde surface S2 du substrat diélectrique 10.

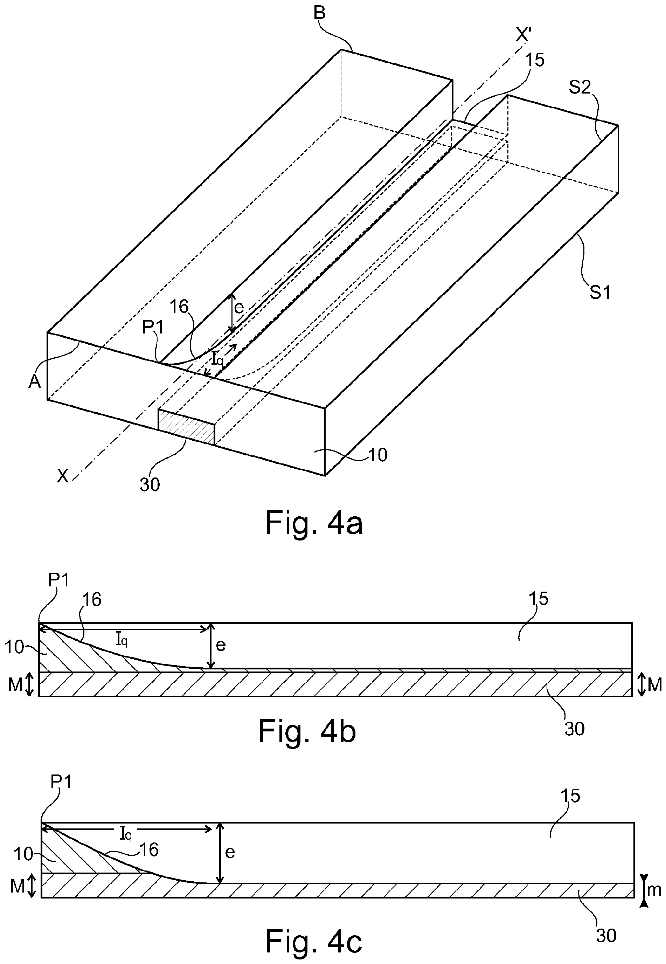

La figure 4a représente une vue en perspective du guide photonique formé selon un exemple de l'étape 200 de la méthode de la figure 2, dans lequel l'amincissement de la seconde surface S2 du substrat diélectrique 10 opposée à la première surface S1 du substrat diélectrique 10 de la figure 3a est effectué.

En particulier, comme illustré dans la figure 4a, l'amincissement selon l'étape 200 mentionnée ci-dessus comprend un évidement 15 dont le profil est parallèle au microruban 30 formé dans la première surface S1 du substrat diélectrique 10 dans l'étape 100 mentionnée ci-dessus. La profondeur de l'évidement 15 évolue continument et progressivement entre un premier point P1 de profondeur nulle à la hauteur de la seconde surface S2, et une profondeur maximale e à une distance prédéterminée l_{q} de la première extrémité A du guide photonique destinée à recevoir la fibre optique. L'évolution de la profondeur de l'évidement 15 forme une zone de transition verticale 16 de mode optique de longueur l_{q} entre le guide d'onde optique et la fibre optique.

La figure 4b illustre une vue en coupe transversale prise le long de X-X' comme indiqué à la figure 4a dans le cas où la profondeur maximale e est telle que le microruban 30 n'est pas aminci après l'amincissement de la seconde surface S2 du substrat diélectrique. Comme illustré dans la figure 4b, l'épaisseur M du microruban 30 après l'amincissement de la seconde surface S2 reste inchangée sur toute la longueur du guide photonique.

Au contraire, la figure 4c illustre une vue en coupe transversale prise le long de X-X' comme indiqué à la figure 4a dans le cas où la profondeur maximale e est telle que le microruban 30 est aussi aminci après l'amincissement de la seconde surface S2 du substrat diélectrique. Comme illustré dans la figure 4c, une partie du microruban 30 a une épaisseur M et une autre partie du microruban 30 est aminci à une épaisseur minimale m.

Dans les exemples des figures 4a-4c, la diminution de la profondeur de l'évidement 15 est effectuée à partir de la première extrémité A du guide photonique.

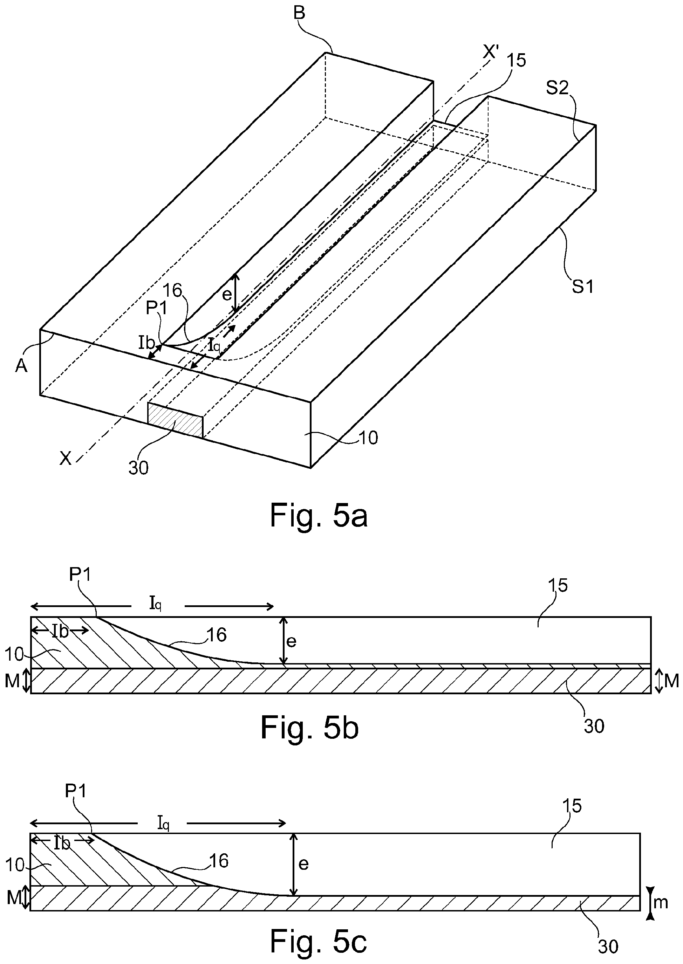

Cependant, dans un autre exemple d'amincissement de la seconde surface S2 du substrat diélectrique 10 selon l'étape 200, la diminution de la profondeur de l'évidement 15 est effectuée à partir d'une distance prédéterminée l_{b} à partir de la première extrémité du guide photonique. Cette diminution de la profondeur est illustrée dans les figures 5a-5c.

En particulier, comme illustré dans la figure 5a, l'amincissement selon l'étape 200 mentionnée ci-dessus comprend un évidement 15 dont le profil est parallèle au microruban 30 formé dans la première surface S1 du substrat diélectrique 10 dans l'étape 100 mentionnée ci-dessus. La profondeur de l'évidement 15 évolue continument et progressivement entre un premier point P1 de profondeur nulle à la hauteur de la seconde surface S2, et une profondeur maximale e à une distance prédéterminée l_{q} de la première extrémité A du guide photonique destinée à recevoir la fibre optique. Le point P1 de profondeur nulle est situé dans une distance prédéterminée l_{b} de la première extrémité A. L'évolution de la profondeur de l'évidement 15 forme une zone de transition verticale 16 de mode optique de longueur l_{q} entre le guide d'onde optique et la fibre optique.

La figure 5b illustre une vue en coupe transversale prise le long de X-X' comme indiqué à la figure 5a dans le cas où la profondeur maximale e est telle que le microruban 30 n'est pas aminci après l'amincissement de la seconde surface S2 du substrat diélectrique 10. Comme illustré dans la figure 5b, l'épaisseur M du microruban 30 après l'amincissement de la seconde surface S2 reste inchangée sur toute la longueur du guide photonique.

Au contraire, la figure 5c illustre une vue en coupe transversale prise le long de X-X' comme indiqué à la figure 5a dans le cas où la profondeur maximale e est telle que le microruban 30 est aussi aminci après l'amincissement de la seconde surface S2 du substrat diélectrique 10. Comme illustré dans la figure 5c, une partie du microruban 30 a une épaisseur M et une autre partie du microruban 30 est aminci à une épaisseur minimale m.

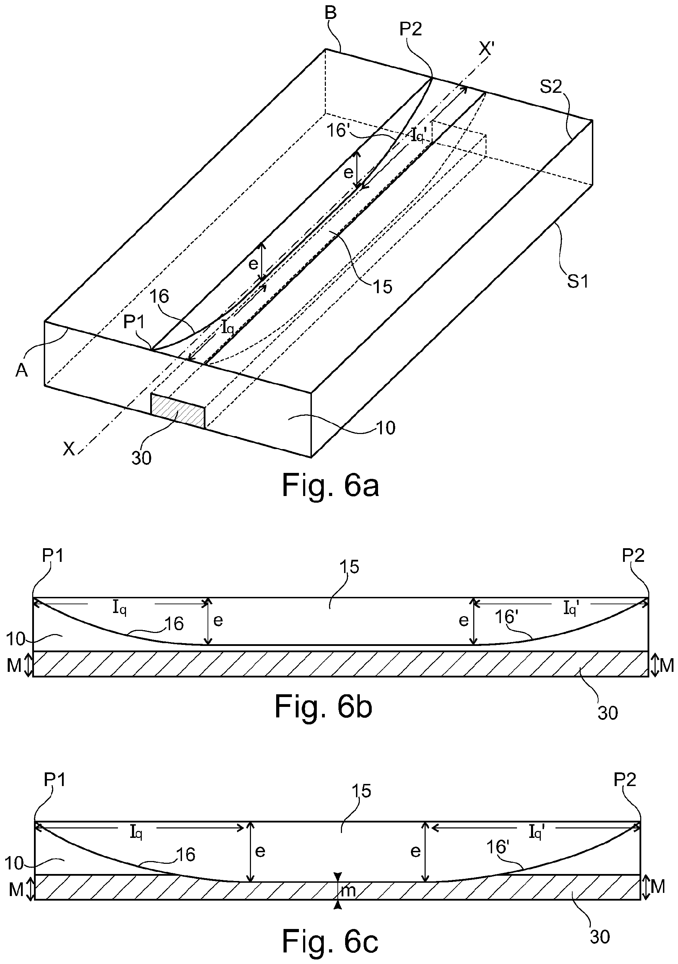

Dans un autre exemple d'amincissement de la seconde surface S2 du substrat diélectrique 10 selon l'étape 200 (voir figure 6a), le découpage de la seconde surface S2 du substrat diélectrique 10 est tel que la profondeur de l'évidement 15 évolue continument et progressivement dans toutes les deux extrémités A et B du guide photonique. En particulier, à part l'évolution de la profondeur de l'évidement 15 dans la première extrémité A qui est faite de la même manière que l'évolution de la profondeur de l'évidement 15 dans la figure 4a, la profondeur de l'évidement 15 évolue continument et progressivement aussi entre un second point P2 de profondeur nulle à la hauteur de la seconde surface S2, et une profondeur maximale e à une distance prédéterminée l_{q'} de la seconde extrémité B du guide photonique destinée à recevoir une fibre optique. Cette évolution de la profondeur de l'évidement 15 forme une zone de transition verticale 16' de mode optique de longueur l_{q'} entre le guide photonique et la fibre optique dans la seconde extrémité du guide photonique. Ainsi, dans la figure 6a, il y a une diminution de la profondeur de l'évidement 15 effectuée à partir de la première extrémité A (point P1) mais aussi de la seconde extrémité B (point P2) du guide photonique. Ainsi, le guide photonique de la figure 6a comporte une zone de transition verticale 16 dans la première extrémité A et une zone de transition verticale 16' dans la seconde extrémité B du guide photonique.

La figure 6b illustre une vue en coupe transversale prise le long de X-X' comme indiqué à la figure 6a dans le cas où la profondeur maximale e est telle que le microruban 30 n'est pas aminci après l'amincissement de la seconde surface S2 du substrat diélectrique 10. Comme illustré dans la figure 6b, l'épaisseur M du microruban 30 après l'amincissement de la seconde surface S2 reste inchangée sur toute la longueur du guide photonique.

Au contraire, la figure 6c illustre une vue en coupe transversale prise le long de X-X' comme indiqué à la figure 6a dans le cas où la profondeur maximale e est telle que le microruban 30 est aussi aminci après l'amincissement de la seconde surface S2 du substrat diélectrique 10. Comme illustré dans la figure 6c, une partie du microruban 30 a une épaisseur M et une autre partie du microruban 30 est aminci à une épaisseur minimale m.

Dans un autre exemple d'amincissement de la seconde surface S2 du substrat diélectrique 10 selon l'étape 200 (voir figure 7a), la diminution de la profondeur de l'évidement 15 est effectuée à partir d'une distance prédéterminée l_{b} à partir de la première extrémité A et la seconde extrémité B du guide photonique. En particulier, la figure 7a diffère de la figure 6a seulement sur le fait que la diminution de la profondeur de l'évidement 15 est effectuée à partir d'une distance prédéterminée l_{b} à partir de la première extrémité A et la seconde extrémité B du guide photonique. Dans l'exemple de la figure 7a, la distance prédéterminée l_{b} est la même à partir de la première extrémité A qu'à partir de la seconde extrémité B. Cependant, dans un autre exemple non illustré dans les figures, la distance prédéterminée l_{b} à partir de la première extrémité A peut être différente que la distance prédéterminée l_{b} à partir de la seconde extrémité B.

La figure 7b illustre une vue en coupe transversale prise le long de X-X' comme indiqué à la figure 7a dans le cas où la profondeur maximale e est telle que le microruban 30 n'est pas aminci après l'amincissement de la seconde surface S2 du substrat diélectrique 10. Comme illustré dans la figure 7b, l'épaisseur M du microruban 30 après l'amincissement de la seconde surface S2 reste inchangée sur toute la longueur du guide photonique.

Au contraire, la figure 7c illustre une vue en coupe transversale prise le long de X-X' comme indiqué à la figure7a dans le cas où la profondeur maximale e est telle que le microruban 30 est aussi aminci après l'amincissement de la seconde surface S2 du substrat diélectrique 10. Comme illustré dans la figure 7c, une partie du microruban 30 a une épaisseur M et une autre partie du microruban 30 est aminci à une épaisseur minimale m.

Les figures 4a-4c, 5a-5c, 6a-6c et 7a-7c illustrent des guides photoniques formés après l'amincissement de la seconde surface S2 du substrat diélectrique 10 de la figure 3a (étape 200 de la méthode de la figure 2), où la première surface S1 du substrat diélectrique 10 comporte un microruban 30 (étape 100 de la méthode de la figure 2).

Cependant, l'amincissement de la seconde surface S2 du substrat diélectrique 10 selon les exemples des figures 4a-4c, 5a-5c, 6a-6c et 7a-7c peut être appliqué aussi dans le cas du substrat diélectrique 10 des figures 3b-3e.

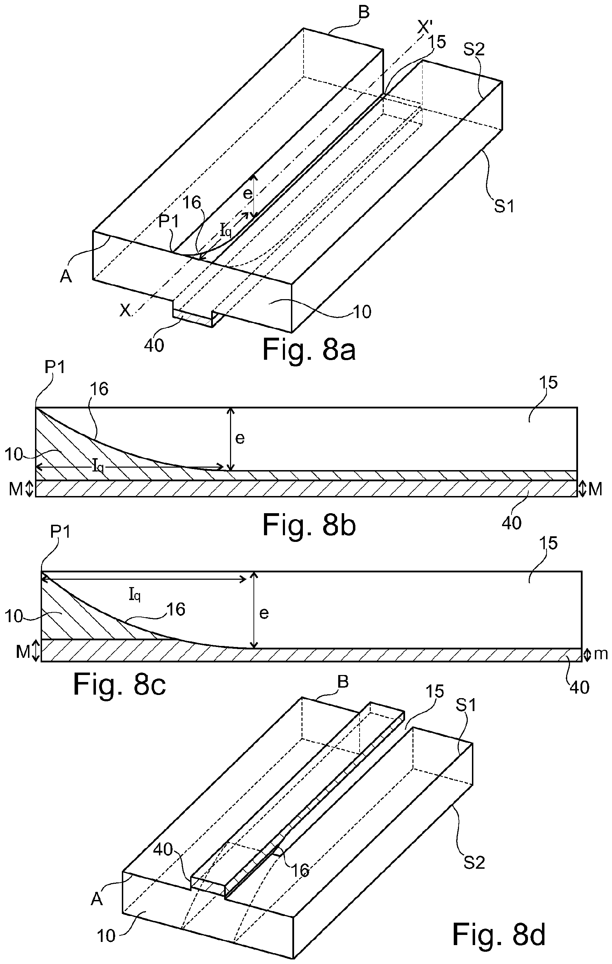

La figure 8a illustre un exemple d'amincissement de la seconde surface S2 du substrat diélectrique 10 de la figure 3b, où la première surface S1 du substrat diélectrique 10 comporte un guide d'onde optique à structure « ridge ». Comme illustré dans la figure 8a, l'amincissement de la seconde surface S2 (selon l'étape 200 mentionnée ci-dessus) comprend un évidement 15 dont le profil est parallèle au guide d'onde optique à structure « ridge » formé dans la première surface S1 du substrat diélectrique 10 (selon l'étape 100 mentionnée ci-dessus). La profondeur de l'évidement 15 évolue continument et progressivement entre un premier point P1 de profondeur nulle à la hauteur de la seconde surface S2, et une profondeur maximale e à une distance prédéterminée l_{q} de la première extrémité A du guide photonique destinée à recevoir la fibre optique. L'évolution de la profondeur de l'évidement 15 forme une zone de transition verticale 16 de mode optique de longueur l_{q} entre le guide d'onde optique et la fibre optique.

La figure 8b illustre une vue en coupe transversale prise le long de X-X' comme indiqué à la figure 8a dans le cas où la profondeur maximale e est telle que le ruban 40 de fort indice de réfraction du guide d'onde optique à structure « ridge » n'est pas aminci après l'amincissement de la seconde surface S2 du substrat diélectrique. Comme illustré dans la figure 8b, l'épaisseur M du ruban de fort indice de réfraction après l'amincissement de la seconde surface S2 reste inchangée sur toute la longueur du guide photonique.

Au contraire, la figure 8c illustre une vue en coupe transversale prise le long de X-X' comme indiqué à la figure 8a dans le cas où la profondeur maximale e est telle que le ruban 40 de fort indice de réfraction du guide d'onde optique à structure « ridge »est aussi aminci après l'amincissement de la seconde surface S2 du substrat diélectrique. Comme illustré dans la figure 8c, une partie du ruban 40 de fort indice de réfraction a une épaisseur M et une autre partie du ruban 40 de fort indice de réfraction est amincie à une épaisseur minimale m.

La figure 8d illustre une vue perspective du guide photonique qui correspond au cas de la figure 8c où la profondeur maximale e est telle que le ruban 40 de fort indice de réfraction du guide d'onde optique à structure « ridge » formé dans la première surface S1 est aussi aminci après l'amincissement de la seconde surface S2 du substrat diélectrique 10. La vue perspective de la figure 8d est une vue perspective inverse de celle de la figure 8a. La figure 8d illustre une partie de la zone de transition verticale 16 formée dans la première extrémité A du guide photonique qui dépasse la première surface S1 du substrat diélectrique 10. En outre, la figure 8d illustre l'évidement 15 après l'amincissement du ruban 40 de fort indice de réfraction du guide d'onde optique à structure « ridge » qui correspond à un trou montré par des lignes pointillées.

De manière similaire à l'amincissement de la seconde surface S2 du substrat diélectrique 10 des figures 8a-8d, l'amincissement de la seconde surface S2 du substrat diélectrique 10 peut être appliqué aussi dans le cas du substrat diélectrique 10 des figures 3c-3e.

Plus particulièrement, comme mentionné ci-dessus, l'amincissement de la seconde surface S2 du substrat diélectrique 10 selon les exemples des figures 4a-4c, 5a-5c, 6a-6c et 7a-7c peut être appliqué aussi dans le cas du substrat diélectrique 10 des figures 3b-3e.

Il est à noter que dans tous les exemples d'amincissement de la seconde surface S2 du substrat diélectrique 10 des figures 4a-4c, 5a-5c, 6a-6c, 7a-7c et 8a-8d, une étape de recuit ou de diffusion à haute température (>800°C) peut être effectuée après le découpage du substrat diélectrique puisque la fabrication des guides photoniques selon la méthode de la figure 2 ne nécessite pas de superstrat. En particulier, les guides photoniques fabriqués par la méthode de la figure 2 peuvent résister à de très hautes températures (>800 °C) pour effectuer diffusion et/ou recuit car il n'y a pas de problème de dilatation différentielle entre substrat et superstrat, ni de problème de tenue en température du collage, comme c'est le cas dans les guides photoniques de l'état de la technique.

Cependant, il est à noter que dans l'exemple des figures 8a-8d, un superstrat peut éventuellement être collé à la surface S1 du guide d'onde optique à structure « ridge » de façon à consolider ce guide pendant l'étape d'amincissement du substrat diélectrique. Ce superstrat est collé par une colle epoxy, une résine ou tout autre élément (métal par exemple) qui peut ensuite être enlevé par insolation laser ou par bain chimique (par exemple en utilisant acétone ou bain de gravure chimique). Au contraire, dans les guides photoniques de l'art antérieur le superstrat reste toujours collé au substrat diélectrique.

Dans tous les exemples des figures 4a-4c, 5a-5c, 6a-6c, 7a-7c et 8a-8d, le profil de la zone de transition verticale 16 et de la zone de transition verticale 16' est arrondi, préférablement avec un rayon de courbure supérieur à 20 mm, puisque il a été constaté que pour un tel rayon de courbure les pertes optiques dans la zone de transition verticale sont inférieures à 0.1dB. Cependant, dans un autre exemple le profil de ces zones a une forme linéaire. En outre, dans un autre exemple, une partie du profil de ces zones peut être arrondie et une autre partie du profil de ces zones peut être linéaire.

A titre d'exemple, le découpage de la seconde surface S2 du substrat diélectrique 10 est un découpage mécanique. Le découpage mécanique peut être effectué au moyen d'une scie circulaire de précision utilisée aussi pour effectuer le découpage de la première surface S1 du substrat diélectrique 10 mentionnée ci-dessus. Un exemple de cette scie circulaire peut être trouvé dans la publication « High aspect ratio lithium niobate ridge waveguides fabricated by optical grade dicing, J. Phys. D: Appl. Phys, 44 305101, (2011) ». Comme c'est le cas dans la publication mentionnée, la lame de la scie circulaire est programmée de telle manière qu'un polissage du substrat diélectrique 10 est effectué en même temps que le découpage du substrat diélectrique 10. Les critères importants pour obtenir un polissage de haute qualité en même temps que le découpage sont le type et la vitesse (vitesse de rotation et vitesse de translation) de la lame de la scie circulaire. L'homme du métier sait comment choisir le type et la vitesse de la lame de la scie circulaire au regard du substrat diélectrique utilisé.

Dans un exemple particulier, la lame de la scie circulaire est descendue progressivement jusqu'à la profondeur maximale e, de sorte que la profondeur de l'évidement évolue comme un arc de cercle de rayon égal au rayon de la lame entre la surface S2 du substrat diélectrique et la profondeur maximale e.

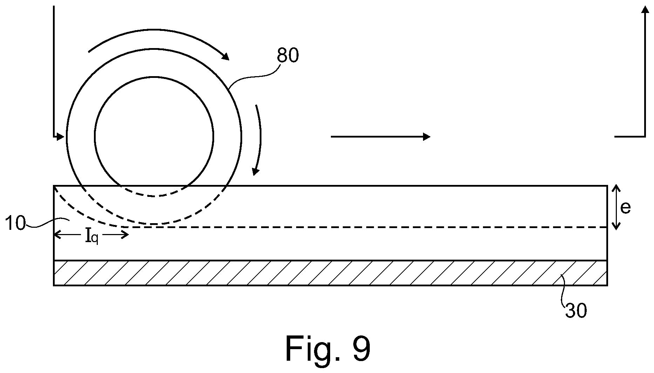

Particulièrement, la figure 9 représente un exemple de découpage de la surface du substrat diélectrique 10 effectuée par une lame 80 d'une scie circulaire pour fabriquer le guide photonique de la figure 4a où la profondeur de l'évidement évolue continument et progressivement à partir de la première extrémité du guide photonique entre un premier point de profondeur nulle à la hauteur de la seconde surface S2, et une profondeur maximale e à une distance prédéterminée l_{q} de la première extrémité du guide photonique.

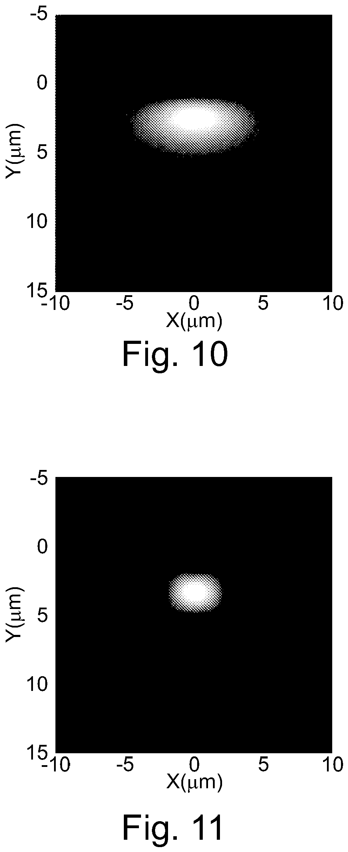

Comme illustré dans la figure 9, la lame de la scie circulaire est descendue progressivement jusqu'à la profondeur maximale e, de sorte que la profondeur de l'évidement évolue comme un arc de cercle de rayon égal au rayon de la lame. Une fois que la lame 80 atteint la profondeur maximale e, elle est animée d'un mouvement de translation parallèle à la surface du substrat diélectrique 10. La trajectoire suivie par la lame 80, afin d'effectuer le découpage du substrat diélectrique 10, est représentée par les flèches de la figure 10.

Dans un autre exemple, le découpage de la seconde surface S2 du substrat diélectrique 10 est effectué par gravure laser. Selon un exemple, un laser femtoseconde est utilisé pour effectuer le découpage de la seconde surface S2 du substrat diélectrique 10. Particulièrement, le découpage d'un substrat diélectrique constitué de niobate de lithium (LiNbO₃) ou de verre nécessite un laser femtoseconde avec une fluence minimale de 1 J/cm². Cependant, il est à noter que dû aux altérations chimiques et structurelles générées par le spot laser, le découpage du substrat diélectrique au moyen du rayon de lumière d'un laser femtoseconde forme des guides photoniques ayant une rugosité plus importante que la rugosité des guides photoniques formés par le découpage du substrat diélectrique au moyen de la lame d'une scie circulaire.

Il est à noter que la méthode d'amincissement du substrat diélectrique en utilisant une scie circulaire ou une gravure laser selon la méthode décrite est simple à mettre en œuvre sans impliquer des conditions de sécurité contraignantes en comparaison avec la méthode d'amincissement du substrat diélectrique de l'art antérieur. Particulièrement, l'amincissement du substrat diélectrique en utilisant la scie circulaire ou la gravure laser implique seulement l'utilisation de lunettes de sécurité. Au contraire, comme mentionné dans l'état de la technique, la méthode d'amincissement du substrat diélectrique de l'art antérieur implique des conditions de sécurité contraignantes (bâtiments régis par des normes strictes, visite médicale avant le début des travaux et périodique, etc.). Il est à noter que la zone de transition verticale 16 est réalisée simultanément avec l'étape 200 d'amincissement du substrat diélectrique, de telle façon que la fabrication de la zone de transition verticale 16 ne nécessite pas d'étape de fabrication supplémentaire à celle de l'amincissement.

En outre, il est à noter qu'après expérimentation il a été constaté que la zone de transition verticale de la seconde surface S2 du substrat diélectrique 10 (voir la zone de transition verticale 16 et la zone de transition verticale 16' décrites dans les figures 4a-4c, 5a-5c, 6a-6c, 7a-7c et 8a-8d) de mode optique entre les guides photoniques et une fibre optique monomode standard permet de réduire significativement (de plus de 3 dB en comparaison avec les pertes d'insertion des guides photoniques de l'état de la technique) les pertes d'insertion entre le mode optique du guide photonique et le mode optique de la fibre optique monomode standard pour des substrats diélectriques amincis à une épaisseur inférieure à 5 µm. Dans une expérience particulière, les pertes d'insertion entre un guide photonique de type « ridge » et une fibre optique monomode standard ont été mesurées pour un guide photonique de type « ridge » sans une zone de transition verticale (voir le guide photonique de la figure 1g de l'état de la technique) et pour un guide photonique de type « ridge » avec une zone de transition verticale sur la seconde surface S2 du substrat diélectrique (voir le guide photonique de la figure 8c). En ce qui concerne le guide photonique de type « ridge » sans zone de transition verticale (figure 1g), les pertes d'insertion pour les polarisations TE (Transverses Electriques) et pour les polarisations TM (Transverses Magnétiques) de l'onde électromagnétique sont de plus de 3 dB plus importantes que celles du guide photonique de type « ridge » de la figure 8c avec une zone de transition verticale 16 pour lequel le ruban 40 est aminci à une épaisseur minimale m inférieure à 5µm. Ces pertes supplémentaires du guide photonique de la figure 1g sont principalement liées aux pertes de couplage (supérieures à 3.5 dB par facette pour une épaisseur R' de 5 µm ou moins). Les pertes de propagation moyennes du guide photonique de la figure 8c peuvent également être améliorées de 0.1 dB/cm ou plus en comparaison des pertes de propagation moyennes du guide photonique de la figure 1g, particulièrement si une étape de recuit à haute température est réalisée en fin de procédé.

En outre, il a été constaté que dans le cas où l'épaisseur minimale m du microruban 30 ou du ruban 40 (voir les figures 4c, 5c, 6c, 7c et 8c) est inférieure à 5 µm, un fort confinement vertical de mode optique apparaît. Plus particulièrement, il a été constaté que lorsque l'épaisseur minimale m du microruban 30 ou du ruban 40 est entre 300nm et 5µm, il apparait des faibles pertes d'insertion et en même temps un fort confinement vertical de mode optique. Il est à noter qu'un fort confinement vertical est utile pour réduire les puissances de consommation des composants photoniques. En effet, un fort confinement vertical augmente les interactions entre ondes optiques guidées pour des composants tout optiques. Il augmente également les interactions entre onde optique guidée et signal électrique extérieur pour des composants électro-optiques, favorisant ainsi de faibles tensions de commandes (de l'ordre de 1V). Un fort confinement vertical est également très important lorsque le guide photonique est microstructuré ou nanostructuré avec des réseaux de Bragg ou des cristaux photoniques par exemple. En effet, ce confinement vertical améliore l'interaction entre l'onde guidée dans le microguide et la micro ou nano-structure, ainsi que cela est reporté en référence « de R. Geiss et al. « Light propagation in a free-standing lithium niobate photonic crystal waveguide, Applied Physics Letters, 97, 131109 (2010).

Il est à noter qu'avec la méthode d'implantation ionique de l'art antérieur il n'est pas possible d'avoir un fort confinement vertical de mode optique et en même temps d'avoir des faibles pertes d'insertion puisque comme mentionné dans l'état de la technique, lorsque le substrat diélectrique est aminci à une épaisseur inférieure à 5µm (dans laquelle un fort confinement vertical commence à apparaître), les pertes en propagation et les pertes de couplage avec une fibre optique monomode standard sont importantes (supérieures à 3dB).

Par ailleurs, il est à noter que dans l'exemple où il y a un amincissement de la seconde surface S2 du substrat diélectrique 10 selon la méthode de la figure 2 résultant à une épaisseur minimale m du ruban (40 ou 45) entre 300nm et 5µm, et le guide d'onde optique de la première surface S1 est un guide d'onde optique à structure « ridge » selon les exemples des figures 3c-3e, le guide photonique présente en même temps un fort confinement vertical et un fort confinement latéral de mode optique. En ce qui concerne le confinement latéral du mode optique dans les figures 3c-3e, plus d'information peut être trouvé dans la demande de brevet français no. 1450795. Ainsi, dans cet exemple, si le ruban (40 ou 45) des figures 3c-3e est aminci à une épaisseur minimale m de 300 nm à 5 µm, il y a un fort confinement vertical et latéral et en même temps il y a des pertes d'insertions faibles entre une fibre optique monomode standard et le guide photonique. Dans un exemple particulier où le guide d'onde optique de la première surface S1 est un guide d'onde optique à structure « ridge » selon la figure 3e, il a été constaté que ces pertes d'insertions sont de 2.6 dB lorsque le guide photonique comporte un guide d'onde optique à structure « ridge » ayant une largeur de 4µm et un ruban 45 avec une épaisseur minimale m de 1 µm, alors que ces pertes sont supérieures à 10 dB si il n'y a aucune zone de transition verticale (cas de la figure 1g, pour un guide photonique sur un substrat diélectrique où l'épaisseur R' est 1µm). Par ailleurs, il est à noter que dans un exemple d'un guide photonique (non illustré dans les figures), la surface S1 du substrat diélectrique 10 est découpée selon l'exemple de la figure 3d pour la formation d'un guide d'onde optique à structure « ridge » avec une zone de transition verticale 50 à l'entrée du guide photonique et la surface S2 du substrat diélectrique 10 est découpée selon l'exemple de la figure 8c afin de former une zone de transition verticale 16 sur cette surface S2. Dans cet exemple, le mode optique est faiblement confiné à l'entrée du guide photonique (voir figure 10), et ainsi les pertes de couplage avec une fibre optique monomode standard sont diminuées à l'entrée du guide photonique, et le mode optique à la sortie du guide photonique (voir figure 11) est confiné latéralement et verticalement. Il est à noter que dans cet exemple, la zone de transition verticale 16 formée dans la surface S2 commence à partir de la fin de la zone de transition verticale 50 formée dans la surface S1, c'est-à-dire à partir d'une distance lₚ à partir de l'extrémité du guide d'onde optique à structure « ridge » au contact avec la fibre optique, laquelle extrémité correspond à l'entrée du guide photonique. En outre, il est à noter que dans cet exemple le ruban 40 du guide d'onde optique à structure « ridge » est aminci (voir figure 8c).

En particulier, la figure 10 montre le mode optique à l'entrée du guide d'onde optique à structure « ridge » de l'exemple du guide photonique mentionné ci-dessus, où la zone de transition verticale 50 est formée. Il est à noter que le mode optique pour la polarisation TE à une longueur d'onde de 1.55 µm a une largeur à mi-hauteur latérale de 7.6 µm et une largeur à mi-hauteur verticale (appelée aussi profondeur à mi-hauteur) de 4.5 µm. Comme illustré dans la figure 10, le mode optique à l'entrée du guide photonique est faiblement confiné.

La figure 11 montre le mode optique à la sortie du guide d'onde optique à structure « ridge » du guide photonique de l'exemple mentionné ci-dessus. Le mode optique pour la polarisation TE à une longueur d'onde de 1.55 µm a une largeur à mi-hauteur latérale de 3.5 nm et une largeur à mi-hauteur verticale (appelée aussi profondeur à mi-hauteur) de 2.5 nm. Comme illustré dans la figure 11, le mode optique à la sortie du guide photonique est latéralement et verticalement confiné.

Après la comparaison des figures 10 et 11, il est clair que le mode optique à l'entrée du guide d'onde optique à structure « ridge » (figure 10) est moins confiné que le mode optique à la sortie du guide d'onde optique à structure « ridge » (figure 11). En particulier, le guide photonique de l'exemple mentionné ci-dessus qui comporte à sa surface S1 le guide d'onde optique à structure « ridge » de la figure 3d présente des pertes de couplage diminuées à son entrée puisque le mode optique à son entrée est faiblement confiné et ainsi il est plus cohérent avec le mode optique d'une fibre optique monomode standard qui est aussi faiblement confiné. Aussi, à la sortie de ce guide photonique, un confinement latéral et vertical est obtenu grâce à la zone de transition verticale 16 formée dans la seconde surface S2 du substrat diélectrique du guide photonique.

Il est à noter que les résultats obtenus en figures 10 et 11 correspondent aux simulations effectuées sur un guide photonique pour lequel on a visualisé le mode optique en différentes sections. Le guide photonique a été fabriqué dans une première étape (étape 100 de la figure 2) par diffusion titane sur un substrat de niobate de lithium, puis il a été découpé et poli simultanément de façon à créer deux évidements R1, R2, distants de wᵣ=5 µm et tels que la profondeur de chaque évidement R1, R2 évolue continument et progressivement entre une profondeur nulle à la hauteur de l'extrémité du guide d'onde optique à structure « ridge » destinée à recevoir la fibre optique, et une profondeur maximale Hₘ de 10 µm. Puis, le ruban du guide d'onde optique à structure « ridge » a été aminci dans une deuxième étape 200 à une profondeur minimale m de 3.5 µm, avec une zone de transition verticale 16 ayant un rayon de courbure de 28 mm.

Il est à noter que dans les guides photoniques fabriqués par la méthode de la figure 2, la zone de transition verticale 16 est effectuée à la surface opposée du guide d'onde optique microruban ou du guide d'onde optique à structure « ridge » et ainsi le mode fondamental n'est que faiblement perturbé dans la zone de transition verticale 16. Ainsi, il n'y a pas d'excitation d'autres modes optiques que le mode optique fondamental. Au contraire, dans le guide photonique de l'état de la technique il y a d'excitation d'autres modes optiques que le mode optique fondamental, comme mentionné dans l'état de la technique.

Les guides photoniques fabriqués par la méthode de la figure 2 peuvent être utilisés dans nombreux domaines comme par exemple le domaine de l'aérospatial, le domaine des télécommunications optiques, le domaine de la détection électromagnétique et le domaine des lasers.

Il est également à noter que dans une application particulière de la méthode de la figure 2, des électrodes peuvent être déposées de part et d'autre du microruban 30 (ou du ruban 40 ou 45) dans une étape postérieure à la fabrication du microruban 30 (ou du ruban 40 ou 45), de façon à réaliser un composant photonique électro-optique. Ces électrodes peuvent être coplanaires et déposées à la surface S1 du substrat diélectrique du guide photonique selon les techniques de lithographies bien connues de l'homme du métier. Elles peuvent également être déposées sur la surface S1 du substrat diélectrique du guide photonique et dans l'évidement 15, après dépôt d'une couche tampon bien connue de l'homme de métier, de façon à les disposer de part et d'autre du guide photonique.

En outre, il est à noter que la méthode de la figure 2 convient particulièrement aux guides d'ondes optiques à gradient d'indice de réfraction, pour lesquels l'onde électromagnétique est guidée grâce à une variation continue latérale et verticale de l'indice de réfraction.

## Revendications

1. Méthode de fabrication d'un guide photonique à faibles pertes d'insertion entre le guide photonique et une fibre optique, la méthode comportant les étapes suivantes:
- formation (100) d'un guide d'onde optique sur une première surface (S1) d'un substrat diélectrique (10);
- amincissement (200) du substrat diélectrique (10) pour former un guide photonique ayant une première extrémité (A) et une seconde extrémité (B) opposée à la première extrémité (A);
l'amincissement étant effectué par découpage d'une seconde surface (S2) du substrat diélectrique (10) opposée à la première surface (S1), l'amincissement comprenant un évidement (15) dont le profil est parallèle au guide d'onde optique,
**caractérisée en ce que**
la profondeur de l'évidement (15) évolue continument et progressivement entre un premier point P1 de profondeur nulle à la hauteur de la seconde surface (S2), et une profondeur maximale (e) à une distance prédéterminée (l_{q}) de la première extrémité du guide photonique destinée à recevoir la fibre optique, l'évolution de la profondeur de l'évidement (15) formant une zone de transition verticale (16) de mode optique de longueur (l_{q}) entre le guide photonique et la fibre optique.

2. Méthode selon la revendication 1, dans laquelle le guide d'onde optique est un guide d'onde optique microruban comportant un microruban 30 de fort indice de réfraction.

3. Méthode selon la revendication 2, dans laquelle après l'amincissement du substrat diélectrique (10), le microruban 30 est aminci à une épaisseur minimale entre 300nm et 5µm.

4. Méthode selon la revendication 1, dans laquelle le guide d'onde optique est un guide d'onde optique à structure « ridge » formé par un ruban (40) de fort indice de réfraction et par le découpage de deux évidements (R1, R2) parallèles et espacés d'une distance wᵣ sur la première surface (S1) du substrat diélectrique, le découpage étant tel que la profondeur de deux évidements (R1, R2) reste la même sur toute la longueur du substrat diélectrique 10.

5. Méthode selon la revendication 1, dans laquelle le guide d'onde optique est un guide d'onde optique à structure « ridge » formé par un ruban (45) de fort indice de réfraction et par le découpage de deux évidements (R1, R2) parallèles et espacés d'une distance wᵣ sur la première surface (S1) du substrat diélectrique, le découpage étant tel que la profondeur de chaque évidement (R1, R2) évolue continument et progressivement entre une profondeur nulle à la hauteur de la première extrémité du guide d'onde optique destinée à recevoir la fibre optique, et une profondeur maximale (Hₘ) à une distance prédéterminée (lₚ) de la première extrémité du guide d'onde optique, l'évolution de la profondeur de chaque évidement (R1, R2) formant une zone de transition verticale (50) de mode optique de longueur (lₚ) entre le guide d'onde optique à structure « ridge » et la fibre optique.

6. Méthode selon l'une quelconque des revendications 4 ou 5, dans laquelle après l'amincissement du substrat diélectrique (10), le ruban (40; 45) est aminci à une épaisseur minimale entre 300nm et 5µm.

7. Méthode selon les revendications 5 ou 6, dans laquelle la diminution de la profondeur de chaque évidement (R1, R2) est effectuée à partir de la première extrémité du guide d'onde optique ou à partir d'une distance prédéterminée (l_{d}) à partir de la première extrémité du guide d'onde optique.

8. Méthode selon l'une quelconque des revendications 5 à 7, dans laquelle le découpage est tel que la profondeur de chaque évidement (R1, R2) évolue continument et progressivement entre une profondeur nulle à la hauteur de la seconde extrémité du guide d'onde optique et une profondeur maximale à une distance prédéterminée (l_{p'}) de la seconde extrémité du guide d'onde optique destinée à recevoir une fibre optique, l'évolution de la profondeur de chaque évidement (R1, R2) formant une zone de transition verticale (50') de mode optique de longueur (l_{p'}) entre le guide d'onde optique à structure « ridge » et la fibre optique.

9. Méthode selon l'une quelconque des revendications 1 à 8, dans laquelle la diminution de la profondeur de l'évidement (15) est effectuée à partir de la première extrémité du guide photonique.

10. Méthode selon l'une quelconque des revendications 1 à 8, dans laquelle la diminution de la profondeur de l'évidement (15) est effectuée à partir d'une distance prédéterminée (l_{b}) à partir de la première extrémité du guide photonique.

11. Méthode selon l'une quelconque des revendications 9 ou 10, dans laquelle le découpage de la seconde surface (S2) du substrat diélectrique (10) est tel que la profondeur de l'évidement (15) évolue continument et progressivement entre un second point P2 de profondeur nulle à la hauteur de la seconde surface (S2), et une profondeur maximale (e) à une distance prédéterminée (l_{q'}) de la seconde extrémité du guide photonique destinée à recevoir une fibre optique, l'évolution de la profondeur de l'évidement (15) formant une zone de transition verticale (16') de mode optique de longueur (l_{q'}) entre le guide photonique et la fibre optique.

12. Méthode selon la revendication 11, dans laquelle la diminution de la profondeur de l'évidement (15) est effectuée à partir de la seconde extrémité du guide photonique ou à partir d'une distance prédéterminée (l_{b}) à partir de la seconde extrémité du guide photonique.

13. Méthode selon l'une quelconque des revendications précédentes, dans laquelle le découpage est effectué au moyen d'une scie circulaire comportant au moins une lame (80).

14. Méthode selon la revendication 13, dans laquelle la lame (80) est descendue progressivement jusqu'à la profondeur maximale (e), de sorte que la profondeur évolue comme un arc de cercle de rayon égal au rayon de la lame (80).

## Patentansprüche

1. Verfahren zur Herstellung eines Photonenleiters mit geringen Einfügungsdämpfungen zwischen dem Photonenleiter und einem Lichtwellenleiter, das Verfahren aufweisend die folgenden Schritte:
- Bilden (100) eines optischen Wellenleiters auf einer ersten Fläche (S1) eines dielektrischen Substrats (10);
- Ausdünnen (200) des dielektrischen Substrats (10), um einen Photonenleiter mit einem ersten Ende (A) und einem zweiten Ende (B), das dem ersten Ende (A) gegenüberliegt, zu bilden;
wobei das Ausdünnen durch Herausschneiden einer zweiten Fläche (S2) des dielektrischen Substrats (10) durchgeführt wird, die der ersten Fläche (S1) gegenüberliegt, die Ausdünnung umfassend eine Aussparung (15), deren Profil zu dem optischen Wellenleiter parallel ist,
**dadurch gekennzeichnet, dass**
sich die Tiefe der Aussparung (15) kontinuierlich und allmählich zwischen einem ersten Punkt P1 der Tiefe Null auf der Höhe der zweiten Fläche (S2) und einer maximalen Tiefe (e) in einem vorbestimmten Abstand (l_{q}) von dem ersten Ende des Photonenleiters, das dazu bestimmt ist, den Lichtwellenleiter aufzunehmen, verändert, wobei die Veränderung der Tiefe der Aussparung (15) einen vertikalen Übergangsbereich (16) einer optischen Mode einer Länge (l_{q}) zwischen dem Photonenleiter und dem Lichtwellenleiter bildet.

2. Verfahren nach Anspruch 1, wobei der optische Wellenleiter ein optischer Mikrostreifen-Wellenleiter ist, der einen Mikrostreifen (30) mit hohem Brechungsindex aufweist.

3. Verfahren nach Anspruch 2, wobei nach dem Ausdünnen des dielektrischen Substrats (10) der Mikrostreifen (30) auf eine minimale Dicke zwischen 300 nm und 5 µm ausgedünnt ist.

4. Verfahren nach Anspruch 1, wobei der optische Wellenleiter ein optischer Wellenleiter mit "Ridge"-Struktur ist, der von einem Streifen (40) mit hohem Brechungsindex und durch das Herausschneiden zweier Aussparungen (R1, R2), die parallel verlaufen und um einen Abstand wᵣ beabstandet sind, auf der ersten Fläche (S1) des dielektrischen Substrats gebildet ist, wobei das Herausschneiden so erfolgt, dass die Tiefe zweier Aussparungen (R1, R2) auf der gesamten Länge des dielektrischen Substrats (10) gleich bleibt.

5. Verfahren nach Anspruch 1, wobei der optische Wellenleiter ein optischer Wellenleiter mit "Ridge"-Struktur ist, der von einem Streifen (45) mit hohem Brechungsindex und durch das Herausschneiden zweier Aussparungen (R1, R2), die parallel verlaufen und um einen Abstand wᵣ beabstandet sind, auf der ersten Fläche (S1) des dielektrischen Substrats gebildet ist, wobei das Herausschneiden so erfolgt, dass sich die Tiefe jeder Aussparung (R1, R2) kontinuierlich und allmählich zwischen einer Tiefe Null auf der Höhe des ersten Endes des optischen Wellenleiters, das dazu bestimmt ist, den Lichtwellenleiter aufzunehmen, und einer maximalen Tiefe (Hₘ) in einem vorbestimmten Abstand (lₚ) von dem ersten Ende des optischen Wellenleiters verändert, wobei die Veränderung der Tiefe jeder Aussparung (R1, R2) einen vertikalen Übergangsbereich (50) einer optischen Mode einer Länge (lₚ) zwischen dem optischen Wellenleiter mit "Ridge"-Struktur und dem Lichtwellenleiter bildet.

6. Verfahren nach einem der Ansprüche 4 oder 5, wobei nach dem Ausdünnen des dielektrischen Substrats (10) der Streifen (40; 45) auf eine minimale Dicke zwischen 300 nm und 5 µm ausgedünnt ist.

7. Verfahren nach den Ansprüchen 5 oder 6, wobei die Verringerung der Tiefe jeder Aussparung (R1, R2) ausgehend von dem ersten Ende des optischen Wellenleiters oder ausgehend von einem vorbestimmten Abstand (l_{d}) ausgehend von dem ersten Ende des optischen Wellenleiters durchgeführt wird.

8. Verfahren nach einem der Ansprüche 5 bis 7, wobei das Herausschneiden so erfolgt, dass sich die Tiefe jeder Aussparung (R1, R2) kontinuierlich und allmählich zwischen einer Tiefe Null auf der Höhe des zweiten Endes des optischen Wellenleiters und einer maximalen Tiefe in einem vorbestimmten Abstand (l_{p'}) von dem zweiten Ende des optischen Wellenleiters, das dazu bestimmt ist, einen Lichtwellenleiter aufzunehmen, verändert, wobei die Veränderung der Tiefe jeder Aussparung (R1, R2) einen vertikalen Übergangsbereich (50') einer optischen Mode einer Länge (l_{p'}) zwischen dem optischen Wellenleiter mit "Ridge"-Struktur und dem Lichtwellenleiter bildet.

9. Verfahren nach einem der Ansprüche 1 bis 8, wobei die Verringerung der Tiefe der Aussparung (15) ausgehend von dem ersten Ende des Photonenleiters durchgeführt wird.

10. Verfahren nach einem der Ansprüche 1 bis 8, wobei die Verringerung der Tiefe der Aussparung (15) ausgehend von einem vorbestimmten Abstand (l_{b}) ausgehend von dem ersten Ende des Photonenleiters durchgeführt wird.

11. Verfahren nach einem der Ansprüche 9 oder 10, wobei das Herausschneiden der zweiten Fläche (S2) des dielektrischen Substrats (10) so erfolgt, dass sich die Tiefe der Aussparung (15) kontinuierlich und allmählich zwischen einem zweiten Punkt P2 der Tiefe Null auf der Höhe der zweiten Fläche (S2) und einer maximalen Tiefe (e) in einem vorbestimmten Abstand (l_{q'}) von dem zweiten Ende des Photonenleiters, das dazu bestimmt ist, einen Lichtwellenleiter aufzunehmen, verändert, wobei die Veränderung der Tiefe der Aussparung (15) einen vertikalen Übergangsbereich (16') einer optischen Mode einer Länge (l_{q'}) zwischen dem Photonenleiter und dem Lichtwellenleiter bildet.

12. Verfahren nach Anspruch 11, wobei die Verringerung der Tiefe der Aussparung (15) ausgehend von dem zweiten Ende des Photonenleiters oder ausgehend von einem vorbestimmten Abstand (l_{b}) ausgehend von dem zweiten Ende des Photonenleiters durchgeführt wird.

13. Verfahren nach einem der vorhergehenden Ansprüche, wobei das Herausschneiden mittels einer Kreissäge mit mindestens einem Blatt (80) durchgeführt wird.

14. Verfahren nach Anspruch 13, wobei das Blatt (80) allmählich bis auf die maximale Tiefe (e) abgesenkt wird, so dass sich die Tiefe wie ein Kreisbogen mit einem Radius, der gleich dem Radius des Blattes (80) ist, verändert.

## Claims

1. Method for manufacturing a photonic waveguide with low insertion losses between the photonic waveguide and an optical fiber, the method including the following steps:
- forming (100) an optical waveguide in a first surface (S1) of a dielectric substrate (10); and
- thinning (200) the dielectric substrate (10) in order to form a photonic waveguide having a first end (A) and a second end (B) opposite the first end (A);
the thinning being carried out by cutting a second surface (S2) of the dielectric substrate (10), which surface is opposite the first surface (S1), the thinning comprising forming a void (15) the profile of which is parallel to the optical waveguide, **characterized in that** the depth of the void (15) varies continuously and gradually between a first point P1 of zero depth at the height of the second surface (S2), and a maximum depth (e) at a preset distance (I_{q}) from the first end of the photonic waveguide, which end is intended to receive the optical fiber, the variation in the depth of the void (15) forming a vertical optical-mode transition zone (16) of length (I_{q}) between the photonic waveguide and the optical fiber.

2. Method according to Claim 1, wherein the optical waveguide is a microstrip optical waveguide including a high-refractive-index microstrip 30.

3. Method according to Claim 2, wherein after the dielectric substrate (10) has been thinned, the microstrip 30 is thinned to a minimum thickness between 300 nm and 5 µm.

4. Method according to Claim 1, wherein the optical waveguide is a ridge optical waveguide formed by a high-refractive-index strip (40) and by cutting two voids (R1, R2) that are parallel and spaced apart by a distance wᵣ into the first surface (S1) of the dielectric substrate, the cutting being such that the depth of the two voids (R1, R2) remains the same the entire length of the dielectric substrate 10.

5. Method according to Claim 1, wherein the optical waveguide is a ridge optical waveguide formed by a high-refractive-index strip (45) and by cutting two voids (R1, R2) that are parallel and spaced apart by a distance wᵣ into the first surface (S1) of the dielectric substrate, the cutting being such that the depth of each void (R1, R2) varies continuously and gradually between a zero depth at the height of the first end of the optical waveguide, which end is intended to receive the optical fiber, and a maximum depth (Hₘ) at a preset distance (Ip) from the first end of the optical waveguide, the variation in the depth of each void (R1, R2) forming a vertical optical-mode transition zone (50) of length (lₚ) between the ridge optical waveguide and the optical fiber.

6. Method according to either one of Claims 4 and 5, wherein after the dielectric substrate (10) has been thinned, the strip (40; 45) is thinned to a minimum thickness between 300 nm and 5 µm.

7. Method according to either of Claims 5 and 6, wherein the depth of each void (R1, R2) decreases starting from the first end of the optical waveguide or starting from a preset distance (I_{d}) from the first end of the optical waveguide.

8. Method according to any one of Claims 5 to 7, wherein the cutting is such that the depth of each void (R1, R2) varies continuously and gradually between a zero depth at the height of the second end of the optical waveguide and a maximum depth at a preset distance (Ip') from the second end of the optical waveguide, which end is intended to receive an optical fiber, the variation in the depth of each void (R1, R2) forming a vertical optical-mode transition zone (50') of length (Ip') between the ridge optical waveguide and the optical fiber.

9. Method according to any one of Claims 1 to 8, wherein the depth of the void (15) decreases starting from the first end of the photonic waveguide.

10. Method according to any one of Claims 1 to 8, wherein the depth of the void (15) decreases starting from a preset distance (Ib) starting from the first end of the photonic waveguide.

11. Method according to either of Claims 9 and 10, wherein the second surface (S2) of the dielectric substrate (10) is cut such that the depth of the void (15) varies continuously and gradually between a second point P2 of zero depth at the height of the second surface (S2), and a maximum depth (e) at a preset distance (I_{q'}) from the second end of the photonic waveguide, which end is intended to receive an optical fiber, the variation in the depth of the void (15) forming a vertical optical-mode transition zone (16') of length (I_{q'}) between the photonic waveguide and the optical fiber.

12. Method according to Claim 11, wherein the depth of the void (15) decreases starting from the second end of the photonic waveguide or starting from a preset distance (Ib)from the second end of the photonic waveguide.

13. Method according to any one of the preceding claims, wherein the cutting is carried out by means of a circular saw including at least one blade (80).

14. Method according to Claim 13, wherein the blade (80) is gradually lowered to the maximum depth (e), so that the depth varies as a circular arc of radius equal to the radius of the blade (80).
